(19) Europäisches Patentamt
European Patent Office
Office européen des brevets

(11) **EP 4 484 859 A1**

(12) **EUROPÄISCHE PATENTANMELDUNG**

(43) Veröffentlichungstag:
**01.01.2025   Patentblatt 2025/01**

(21) Anmeldenummer: **24183581.8**

(22) Anmeldetag: **21.06.2024**

(51) Internationale Patentklassifikation (IPC):
**F25B 49/02** (2006.01)

(52) Gemeinsame Patentklassifikation (CPC):
**F25B 49/02;** F25B 2600/0253; F25B 2600/2513;
F25B 2700/1933; F25B 2700/21151;
F25B 2700/21175

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **30.06.2023   DE 102023206186**

(71) Anmelder: **Robert Bosch GmbH
70442 Stuttgart (DE)**

(72) Erfinder: **Wiesboeck, Martin
3712 Maissau (AT)**

(54) **VERFAHREN ZUR STEUERUNG EINES ELEKTRONISCH STEUERBAREN EXPANSIONSVENTILS (EEV) IN EINEM KÄLTEMITTELKREISLAUF**

(57)    Die Erfindung betrifft ein Verfahren zur Steuerung eines elektronisch steuerbaren Expansionsventils (EEV) in einem Kältemittelkreislauf, der Kältemittelkreislauf zumindest umfassend ein zirkulierendes Kältemittel, einen Kompressor, einen in Flussrichtung des Kältemittels hinter dem Kompressor und vor dem EEV angeordneten Kondensator, und einen in Flussrichtung des Kältemittels hinter dem EEV und vor dem Kompressor angeordneten Verdunster, das Verfahren umfassend die folgenden Schritte:
S1.
Bestimmen einer Verdunstungstemperatur TV des Kältemittels;
S2.
Bestimmen eines zu der Verdunstungstemperatur TV korrespondierenden Soll-Ansaugdruckes PIst des Kältemittels an oder hinter einem Ausgang des Verdunsters;
S3.
Bestimmen eines Ist-Ansaugdruckes PIst des Kältemittels an oder hinter dem Ausgang des Verdunsters und Bestimmen einer Druckabweichung DP zwischen Ist-Ansaugdruck PIst und Soll-Ansaugdruck PSoll;
S4.
Steuern des Kompressors zumindest teilweise auf Grundlage der Druckabweichung DP;
S5.
Bestimmen einer Solltemperatur TSoll des Kältemittels an einer vorbestimmten Stelle des Kältekreislaufs;
S6.
Bestimmen einer Ist-Temperatur TIst des Kältemittels an oder hinter dem Ausgang des Verdunsters und Bestimmen einer Temperaturabweichung DT zwischen Ist-Temperatur TIst und Solltemperatur TSoll;

S7.
Steuern des EEV zumindest teilweise auf Grundlage der Temperaturabweichung DT.

Die Erfindung betrifft ferner eine Steuerungseinrichtung für ein elektronisch steuerbares Expansionsventil, einen Kältemittelkreislauf mit einem elektronisch steuerbaren Expansionsventil, ein Computerprogramm zur Durchführung des obigen Verfahrens und einen computerlesbaren Datenträger, auf dem das Computerprogramm gespeichert ist. (Fig. 1)

**Fig. 1**

**Beschreibung**

Die Erfindung betrifft ein Verfahren zur Steuerung eines elektronisch steuerbaren Expansionsventils (EEV) in einem Kältemittelkreislauf. Der Kältemittelkreislauf kann insbesondere ein Kältemittelkreislauf in einem batterie-elektrisch angetriebenen Fahrzeug sein und eingerichtet zur Bereitstellung thermischer Energie für eine Passagierkabine oder andere Komponenten wie beispielsweise die elektrische Batterie.

Stand der Technik

Kältemittelkreisläufe werden im Stand der Technik für verschiedene Anwendungen eingesetzt, um einen Wärmetransport in einer gewünschten Richtung zu erreichen. Beispiele umfassen das Heizen einer Passagierkabine und/oder einer Batterie eines Fahrzeugs bei kalten Umgebungstemperaturen, sowie das bedarfsweise Kühlen von Passagierkabine und/oder Batterie.

In solchen Kältemittelkreisläufen wird der physikalische Effekt ausgenutzt, dass der Verdunstungspunkt des Kältemittels in einem bestimmten Temperaturbereich durch eine Veränderung des Druckes des Kältemittels beeinflusst werden kann. Es gilt, dass der Verdunstungspunkt steigt, wenn der Kältemitteldruck steigt.

Zur Erhöhung des Druckes werden in Kältemittelkreisläufen elektronisch steuerbare Kompressoren eingesetzt, die den Druck in einem Abschnitt des Kältemittelkreislaufs erhöhen, in welchem ein Kondensator zur Abgabe thermischer Energie beispielsweise an die Passagierkabine angeordnet ist. Dieser Abschnitt wird durch ein elektronisch steuerbares Expansionsventil (EEV) begrenzt, durch welches das Kältemittel entspannt und auf ein niedrigeres Druckniveau gebracht wird. Hinter dem EEV ist ein Verdunster zur Aufnahme thermischer Energie beispielsweise aus der Fahrzeugumgebung oder aus Abwärme von weiteren Fahrzeugkomponenten angeordnet.

Eine Anforderung an den Kältekreislauf kann beispielsweise lauten, dass das Kältemittel im Verdunster ein bestimmtes Temperaturniveau haben soll, um gegenüber der abzuführenden Wärme ein bestimmtes Gefälle aufzuweisen, und dass außerdem die Kältemitteltemperatur hinter dem Verdunster um ein vorbestimmtes Maß über der Verdunstungstemperatur des Kältemittels liegen soll, sodass sichergestellt ist, dass ausschließlich gasförmiges Kältemittel von dem Kompressor angesaugt wird.

Um diese Anforderung zu erfüllen, wurden verschiedene Steuerverfahren für das Expansionsventil und den Kompressor vorgeschlagen. Es hat sich jedoch gezeigt, dass sich bei den bisher bekannten Verfahren eine nachteilige gegenseitige Beeinflussung aus Kompressorsteuerung und Steuerung des EEV einstellt, die dafür sorgt, dass die Steuerung träge ist und sich gegebenenfalls kein stabiler Betrieb des Kompressors einstellen lässt.

Es ist eine Aufgabe der Erfindung, ein alternatives oder ein verbessertes Verfahren zur Steuerung eines elektronisch steuerbaren Expansionsventils in einem Kältemittelkreislauf anzugeben, sowie eine Steuerung eines elektronisch steuerbaren Expansionsventils, einen Kältemittelkreislauf, ein Computerprogramm zur Durchführung des Verfahrens, und einen computerlesbaren Datenträger.

Offenbarung der Erfindung

Die Aufgabe der Erfindung ist mittels eines Verfahrens gemäß Anspruch 1 gelöst, durch eine Steuerung eines elektronisch steuerbaren Expansionsventils (EEV) gemäß Anspruch 8, durch einen Kältemittelkreislauf gemäß Anspruch 9, durch ein Computerprogramm gemäß Anspruch 10, und durch einen computerlesbaren Datenträger gemäß Anspruch 11.

Vorteilhafte Weiterbildungen, zusätzliche Merkmale und/oder Vorteile der Erfindung ergeben sich aus den abhängigen Ansprüchen und der folgenden Beschreibung.

Gemäß einem ersten Aspekt offenbart die vorliegende Offenbarung ein Verfahren zur Steuerung eines elektronisch steuerbaren Expansionsventils (EEV) in einem Kältemittelkreislauf, der Kältemittelkreislauf zumindest umfassend ein zirkulierendes Kältemittel, einen Kompressor, einen in Flussrichtung des Kältemittels hinter dem Kompressor und vor dem EEV angeordneten Kondensator, und einen in Flussrichtung des Kältemittels hinter dem EEV und vor dem Kompressor angeordneten Verdunster, das Verfahren umfassend die folgenden Schritte:

S1.  Bestimmen einer gewünschten Verdunstungstemperatur $T_V$ des Kältemittels;

S2.  Bestimmen eines zu der Verdunstungstemperatur Tv korrespondierenden Soll-Ansaugdruckes $P_{Ist}$ des Kältemittels an oder hinter einem Ausgang des Verdunsters;

S3.  Bestimmen eines Ist-Ansaugdruckes $P_{Ist}$ des Kältemittels an oder hinter dem Ausgang des Verdunsters und Bestimmen einer Druckabweichung $\Delta_P$ zwischen Ist-Ansaugdruck $P_{Ist}$ und Soll-Ansaugdruck $P_{Soll}$;

S4.  Steuern des Kompressors zumindest teilweise auf Grundlage der Druckabweichung $\Delta_P$;

(fortgesetzt)

S5.    Bestimmen einer Solltemperatur $T_{Soll}$ des Kältemittels an einer vorbestimmten Stelle des Kältekreislaufs;

S6.    Bestimmen einer Ist-Temperatur $T_{Ist}$ des Kältemittels an der vorbestimmten Stelle und Bestimmen einer Temperaturabweichung $\Delta_T$ zwischen Ist-Temperatur $T_{Ist}$ und Solltemperatur $T_{Soll}$;

S7.    Steuern des EEV zumindest teilweise auf Grundlage der Temperaturabweichung $\Delta_T$.

Gemäß einem weiteren Aspekt offenbart die vorliegende Offenbarung eine Steuerungseinrichtung für ein elektronisch steuerbares Expansionsventil (EEV) in einem Kältemittelkreislauf, der Kältemittelkreislauf zumindest umfassend: ein zirkulierendes Kältemittel; einen Kompressor mit Kompressorsteuerung; einen in Flussrichtung des Kältemittels hinter dem Kompressor und vor dem EEV angeordneten Kondensator; einen in Flussrichtung des Kältemittels hinter dem EEV und vor dem Kompressor angeordneten Verdunster; eine Einrichtung zur Bestimmung und Übermittlung eines Temperatursignals an die Steuerungseinrichtung, wobei das Temperatursignal eine Ist-Temperatur $T_{Ist}$ des Kältemittels an oder hinter einem Ausgang des Verdunsters wiedergibt; und eine Einrichtung zur Bestimmung und Übermittlung eines Drucksignals an die Kompressorsteuerung sowie and die Steuerungseinrichtung, wobei das Drucksignal einen Ist-Ansaugdruck $P_{Ist}$ des Kältemittels an oder hinter dem Ausgang des Verdunsters wiedergibt; wobei die Steuerungseinrichtung zur Durchführung des oben beschriebenen Verfahrens eingerichtet ist.

Gemäß einem weiteren Aspekt offenbart die vorliegende Offenbarung einen Kältemittelkreislauf, umfassend: ein elektronisch steuerbares Expansionsventil (EEV); eine Steuerungseinrichtung für das EEV; ein zirkulierendes Kältemittel; einen Kompressor mit Kompressorsteuerung; einen in Flussrichtung des Kältemittels hinter dem Kompressor und vor dem EEV angeordneten Kondensator; einen in Flussrichtung des Kältemittels hinter dem EEV und vor dem Kompressor angeordneten Verdunster; eine Einrichtung zur Bestimmung und Übermittlung eines Temperatursignals an die Steuerungseinrichtung, wobei das Temperatursignal eine Ist-Temperatur $T_{Ist}$ des Kältemittels an oder hinter einem Ausgang des Verdunsters wiedergibt; und eine Einrichtung zur Bestimmung und Übermittlung eines Drucksignals an die Kompressorsteuerung sowie and die Steuerungseinrichtung, wobei das Drucksignal einen Ist-Ansaugdruck $P_{Ist}$ des Kältemittels an oder hinter dem Ausgang des Verdunsters wiedergibt; wobei die Steuerungseinrichtung des EEV zur Durchführung oben beschriebenen Verfahrens eingerichtet ist.

Gemäß einem weiteren Aspekt offenbart die vorliegende Offenbarung ein Computerprogramm zur Durchführung des oben beschriebenen Verfahrens, wenn das Computerprogramm von einer Steuerungseinrichtung eines elektronischen Expansionsventils (EEV) ausgeführt wird oder auf einem computerlesbaren Datenträger gespeichert ist.

Gemäß einem weiteren Aspekt offenbart die vorliegende Offenbarung ein Computerlesbarer Datenträger, auf dem das Computerprogramm gespeichert ist.

In dem Verfahren kann das Steuern des EEV in Schritt S7 sowohl auf Grundlage der Temperaturabweichung $\Delta T$ als auch auf Grundlage der Druckabweichung $\Delta P$ erfolgen.

Das EEV in Schritt S7 kann wahlweise mit einem PID-Steueransatz (Proportional-Integral-Differential), mit einem PD-Steueransatz (Proportional-Differential), oder mit einem quasi-PD-Steueransatz gesteuert werden.

Schritt S7 kann die folgenden Schritte umfassen:

S7a - Vergleichen der Druckabweichung $\Delta P$ mit einem vorbestimmten Toleranzwert $\varepsilon$ und Feststellen anhand des Vergleichs, ob der Ist-Ansaugdruck $P_{Ist}$ innerhalb oder außerhalb eines durch den Toleranzwert $\varepsilon$ festgelegten Toleranzbereichs um den Soll-Ansaugdruck $P_{Soll}$ liegt;

S7b - auf Grundlage der in Schritt S7a gemachten Feststellung, Steuern des EEV in Schritt S7 mit einem PD-Steueransatz oder mit einem quasi-PD-Steueransatz in dem Fall, dass der Ist-Ansaugdruck $P_{Ist}$ außerhalb des vorbestimmen Toleranzbereichs um den Soll-Ansaugdruck $P_{Soll}$ liegt, und Steuern des EEV in Schritt S7 mit einem PID-Steueransatz in dem Fall, dass der Ist-Ansaugdruck $P_{Ist}$ innerhalb des vorbestimmen Toleranzbereichs um den Soll-Ansaugdruck $P_{Soll}$ liegt.

Die Schritte S7a und S7b können wiederholt in einer Schleife durchgeführt werden.

In Schritt S7 kann eine Eingangsgröße der Steuerung des EEV die Temperaturabweichung $\Delta T$ sein und eine Ausgangsgröße der Steuerung ein Öffnungsquerschnitt des EEV.

Die vorbestimmte Stelle des Kältekreislauf kann an oder hinter dem Ausgang des Verdunsters gelegen sein.

Die Solltemperatur Ts kann in Schritt S5 so bestimmt werden, dass sie um ein vorbestimmtes Maß höher ist als die Verdunstungstemperatur $T_V$.

Die vorbestimmte Stelle des Kältekreislauf kann an oder hinter einem Ausgang des Kondensators gelegen sein.

Die Solltemperatur Ts in Schritt kann S5 so bestimmt werden, dass sie um ein vorbestimmtes Maß geringer ist als die Verdunstungstemperatur Tv.

Kurzbeschreibung der Figuren

Die Erfindung ist im Folgenden anhand von Ausführungsbeispielen unter Bezugnahme auf die beigefügte schematische und nicht maßstabsgetreue Zeichnung näher erläutert. Bei der Erfindung kann ein Merkmal positiv, d. h. vorhanden, oder negativ, d. h. abwesend, ausgestaltet sein. In dieser Spezifikation ist ein negatives Merkmal als Merkmal nicht explizit erläutert, wenn nicht gemäß der Erfindung Wert daraufgelegt ist, dass es abwesend ist. D. h. die tatsächlich gemachte und nicht eine durch den Stand der Technik konstruierte Erfindung darin besteht, dieses Merkmal wegzulassen. Das Fehlen eines Merkmals (negatives Merkmal) in einem Ausführungsbeispiel zeigt, dass das Merkmal optional ist. - In den lediglich beispielhaften und Figuren (Fig.) der Zeichnung zeigen:

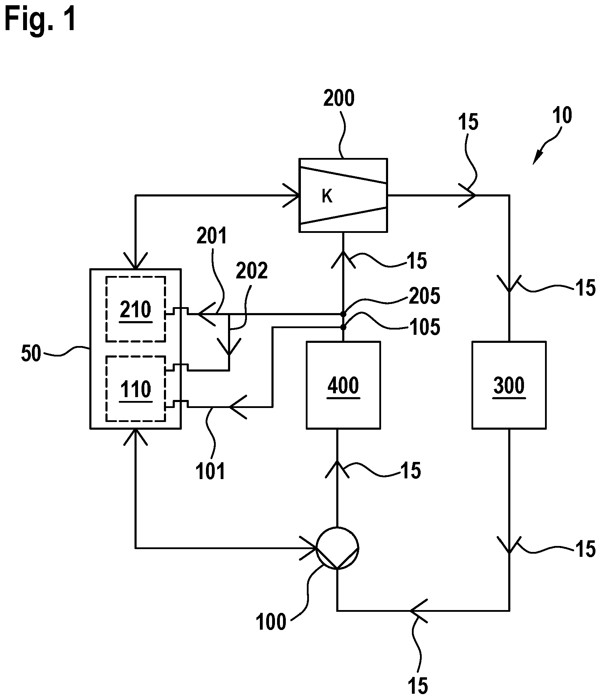

Fig. 1    einen Kältemittelkreislauf gemäß einer Ausführungsform der Erfindung.

Beschreibung

Figur 1 zeigt einen Kältemittelkreislauf 10, in dem ein Kältemittel zirkuliert, angetrieben beispielsweise durch eine nicht dargestellte Kältemittelpumpe. Das Kältemittel umfasst insbesondere Propan (R290) und/oder $CO_2$ (R744). Eine Flussrichtung des Kältemittels ist in Figur 1 durch Pfeile 15 angedeutet. Dabei nimmt das Kältemittel Wärme an einem Verdunster 400 auf, beispielsweise aus einer Umgebung des Fahrzeugs oder aus Abwärme bestimmter Fahrzeugkomponenten, und gibt sie an einem Kondensator 300 ab, beispielsweise an eine Passagierkabine oder an eine Batterie. Optional können auch weitere Wärmequellen und -senken in dem Kältekreislauf 10 angeordnet sein.

Zur Anhebung des Temperaturniveaus des Kältemittels wird das Kältemittel durch einen zwischen Verdunster 400 und Kondensator 300 angeordneten elektronisch steuerbaren Kompressor 200 auf einen höheren Druck gebracht. Zur Entspannung des Kältemittels ist hinter dem Kondensator 300 ist ein elektronisch steuerbares Expansionsventil (EEV) 100 angeordnet.

Die gewünschte Temperatur $T_{Soll}$ des Kältemittels im Verdunster 400 ist in der Regel je nach Situation veränderlich und hängt von verschiedenen Faktoren ab. Beispielsweise soll in dem Fall, dass die Sekundärseite des Verdunsters 400 Luft ist, die Kältemitteltemperatur $T_{Soll}$ nicht zu kalt sein, um eine Vereisung des Verdunsters 400 durch Feuchte aus der Umgebung zu vermeiden. Eine zu hohe Temperatur $T_{Soll}$ des Kältemittels im Verdunster 400 dagegen verringert die Wärmeaufnahme, was wiederum zu einer zu geringen Wärmeabgabe am Kondensator 300 und somit zu Feuchte- und Geruchsproblemen in der Passagierkabine führen kann.

Ferner werden entsprechend dem Aufbau des jeweiligen Kältekreislaufs 10 weitere Anforderungen an die Kältemitteltemperatur $T_{Soll}$ an vorbestimmten Stellen des Kältemittelkreislaufs 10 gestellt.

Beispielsweise soll bei bestimmten Systemen, etwa Receiver/Drier Systemen, die Kältemitteltemperatur $T_{Soll}$ hinter dem Verdunster 400 um ein vorbestimmtes Maß über der Verdunstungstemperatur Tv des Kältemittels liegen, sodass sichergestellt ist, dass ausschließlich gasförmiges Kältemittel von dem Kompressor 200 angesaugt wird. Die Temperaturspanne, um welche die Kältemitteltemperatur $T_{Soll}$ über der Verdunstungstemperatur Tv des Kältemittels am Verdunsterausgang liegt, wird auch als "Überhitzungswärme" oder "Superheat" bezeichnet.

Eine andere Anforderung an den Kältekreislauf 10 kann lauten, dass hinter dem Kondensator 300 ein "Subcooling" des Kältemittels erreicht werden muss, beispielsweise in Akkumulatorsystemen. "Subcooling" bedeutet, dass $T_{Soll}$ eine Temperatur, die um ein vorbestimmtes Maß unter der der Verdunstungstemperatur Tv des Kältemittels liegt.

Im Rahmen der weiteren Beschreibung wird exemplarisch eine Ausführungsform beschrieben, in welcher die vorbestimmte Stelle am oder hinter dem Ausgang des Verdunsters 400 gelegen ist, und dass an dieser Stelle Superheat gewährleistet sein muss.

Eine Steuerung des Kältemittelkreislaufs 10 kann derart erfolgen, dass in einem Schritt S1 die gewünschte Verdunstungstemperatur Tv des Kältemittels bestimmt wird, nach Maßgabe der oben genannten Randbedingungen. In einem Schritt S2 wird durch die bekannte Beziehung zwischen der Verdunstungstemperatur Tv des Kältemittels bei einem bestimmten Druckniveau ein zu der Verdunstungstemperatur Tv korrespondierender Soll-Ansaugdruck $P_{Ist}$ des Kältemittels an oder hinter dem Ausgang des Verdunsters 400 bestimmt.

In einem Schritt S3 wird durch eine geeignete Einrichtung 205 und mit einer geeigneten Frequenz ein Ist-Ansaugdruck $P_{Ist}$ des Kältemittels an oder hinter dem Ausgang des Verdunsters 400 bestimmt, beispielsweise durch einen an dieser Stelle angeordneten Drucksensor, und ein korrespondierendes Drucksignal an eine Kompressorsteuerung 210 gesendet, was in Figur 1 durch die Verbindung 201 angedeutet ist. Nach Vorliegen des Soll- und Istwertes des Ansaugdruckes wird eine Druckabweichung $\Delta_P$ zwischen Ist-Ansaugdruck $P_{Ist}$ und Soll-Ansaugdruck $P_{Soll}$ bestimmt, gemäß $\Delta_P = P_{Ist} - P_{Soll}$.

Die elektronische Kompressorsteuerung 210 steuert den Kompressor 200 in einem Schritt S4 zumindest teilweise in Abhängigkeit der Druckabweichung $\Delta_P$ als Eingangsgröße der Steuerung, die mit einer geeigneten Frequenz von der Kompressorsteuerung 210 bestimmt wird, also eine Funktion der Zeit $\Delta_P(t)$ ist. Weitere Eingangsgrößen können durch die Kompressorsteuerung 210 ebenfalls berücksichtigt werden.

In einem Schritt S5 wird durch eine Steuereinrichtung 110 zur Steuerung des EEV 100 eine Solltemperatur $T_{Soll}$ des Kältemittels an der vorbestimmten Stelle des Kältemittelkreislaufs 10, hier also an oder hinter dem Ausgang des Verdunsters 400 bestimmt. Wie oben bereits erläutert, wird die Solltemperatur $T_{Soll}$ in dem Fall, dass Superheat gewährleistet werden soll, derart bestimmt, dass sie um ein bestimmtes Maß über der Verdunstungstemperatur Tv des Kältemittels liegt, was wahlweise durch einen Summationsansatz $T_{Soll} = T_V + \Delta_T$, mit einem konstanten Term $\Delta_T$ als Superheat, oder durch einen Produktansatz $T_{Soll} = cT_V$ mit konstantem faktoriellem Abstand c von der Verdunstungstemperatur als Superheat berücksichtigt werden kann.

In einem Schritt S6 erfolgt eine Bestimmung einer Ist-Temperatur $T_{Ist}$ des Kältemittels an der vorbestimmten Stelle, in der beschriebenen Ausführungsform also an oder hinter dem Ausgang des Verdunsters 400. Die Bestimmung der Ist-Temperatur $T_{Ist}$ des Kältemittels an oder hinter dem Ausgang des Verdunsters 400 kann dabei durch eine an dieser Stelle angeordnete geeignete Einrichtung 105 zur Bestimmung der Ist-Temperatur $T_{Ist}$ des Kältemittels erfolgen, beispielsweise durch einen Temperatursensor. Die Ist-Temperatur $T_{Ist}$ wird an die Steuereinrichtung 110 übermittelt, was in Figur 1 durch die Linie 101 angedeutet ist.

Ebenfalls in Schritt S6 erfolgt eine Bestimmung einer Temperaturabweichung $\Delta_T$ zwischen Ist-Temperatur $T_{Ist}$ und Solltemperatur $T_{Soll}$ durch die Steuereinrichtung 110, gemäß $\Delta_T = T_{Ist} - T_{Soll}$.

Die Steuereinrichtung 110 steuert das EEV 100 in einem Schritt S7 zumindest teilweise in Abhängigkeit der Temperaturabweichung $\Delta_T(t)$ als Eingangsgröße der Steuerung, wobei mit t wiederum die Abhängigkeit der Temperaturabweichung $\Delta_T$ von der Zeit angedeutet ist. Die Temperaturabweichung $\Delta_T(t)$ wird praktisch quasi-kontinuierlich mit einer geeigneten Frequenz von der Steuereinrichtung 110 bestimmt. Eine Ausgangsgröße der Steuerung ist ein Öffnungsquerschnitt u(t) des EEV 100, wiederum als Funktion in Abhängigkeit von der Zeit.

Als Steuerungsansatz wird in der Steuereinrichtung 110 dabei ein PID-Ansatz verwendet (Proportional-Integral-Differenziell). Der PID-Steuerungsansatz ist prinzipiell bekannt und basiert auf folgendem Zusammenhang zwischen Steuervariable u(t) und Prozessvariable $\Delta_T(t)$:

$$u(t) = K_p \Delta_T(t) + K_i \int_0^t \Delta_T(t)d\tau + K_d \frac{d\Delta_T(t)}{dt} \text{ (Gleichung 1)}$$

Dabei sind $K_p$, $K_i$, und $K_d$ allesamt nicht-negative Koeffizienten des proportionalen ($K_p$), integralen ($K_i$), und differentialen ($K_d$) Anteils der Verstärkung der Prozessvariable $\Delta_T(t)$.

Da sich eine Veränderung des Öffnungsquerschnitts u(t) des EEV 100 auch auf den Ansaugdruck des Kältemittels vor dem Kompressor 200 auswirkt, kann eine gegenseitige Beeinflussung der Kompressorsteuerung 210 und der Steuereinrichtung 110 auftreten, was auch als "crosstalk" bezeichnet wird und dazu führen kann, dass der gewünschte Druck $P_{Soll}$ des Kältemittels hinter dem Verdunster nicht stabil eingestellt werden kann.

In Ausführungsformen der Erfindung wird daher in der Steuerungseinrichtung in einem Schritt 7a die Druckabweichung $\Delta_P$ mit einem vorbestimmten Toleranzwert $\varepsilon$ verglichen. Anhand des Vergleichs wird festgestellt, ob der Ist-Ansaugdruck $P_{Ist}$ innerhalb oder außerhalb eines durch den Toleranzwert $\varepsilon$ festgelegten Toleranzbereichs $P_T = P_{Soll} \pm \varepsilon$ um den Soll-Ansaugdruck $P_{Soll}$ liegt.

Auf Grundlage der in Schritt S7a gemachten Feststellung wird in einem Schritt 7b das EEV 100 in dem Fall, dass der Ist-Ansaugdruck $P_{Ist}$ außerhalb des vorbestimmen Toleranzbereichs $P_T$ um den Soll-Ansaugdruck $P_{Soll}$ liegt, mit einem PD-Steueransatz (Proportional - Differential) gesteuert, oder mit einem quasi-PD-Steueransatz. Hierfür kann im Fall des PD-Ansatzes der in Gleichung 1 genannte Koeffizient $K_i$ zu Null gesetzt werden. Im Fall des quasi-PD-Steueransatzes wird der integrale Anteil sehr klein gewählt, was heißt, dass in Gleichung 1 ein sehr kleiner, jedoch nicht verschwindender Koeffizient für $K_i$ auftritt. Der Steueransatz verhält sich dann annähernd wie ein PD-Steueransatz, weshalb im Rahmer dieser Anmeldung der Begriff quasi-PD-Steueransatz verwendet wird.

In dem Fall, dass der Ist-Ansaugdruck $P_{Ist}$ innerhalb des vorbestimmen Toleranzbereichs $P_T$ um den Soll-Ansaugdruck $P_{Soll}$ liegt, wird das EEV 100 mit einem PID-Steueransatz gesteuert. Die Schritte S7a und S7b werden mit einer geeigneten Frequenz in einer Schleife wiederholt.

Vorteile dieser Ausführungsform umfassen, dass das EEV 100 während einer Zeitspanne, in welcher der Kompressor 200 den Toleranzbereich $P_T$ des Soll-Ansaugdrucks $P_{Soll}$ nicht erreicht, nur mit dem proportionalen und dem diffferentialen Anteil des Steueransatzes der Gleichung 1 gesteuert wird. Dadurch kann der Kompressor 200 den Zielwert $P_{Soll}$ schneller erreichen, als wenn das EEV 100 auf einen festen Öffnungswert eingestellt wäre, und trotzdem nahezu Überhitzung herrscht. Die Regelung nahe der Überhitzung erhöht die Effizienz des Betriebs.

Desweiteren wurde seitens der Erfinder festgestellt, dass in vielen Anwendungen die Parameter für den PD-Regelmodus und den PID-Regelmodus nicht geändert werden müssen, sodass nur ein Parametersatz erforderlich ist. In dem Fall, dass der Ist-Ansaugdruck $P_{Ist}$ außerhalb des vorbestimmen Toleranzbereichs $P_T$ um den Soll-Ansaugdruck $P_{Soll}$ liegt, wird in der in Gleichung 1 genannten Gleichung der Koeffizient $K_i$ einfach zu Null gesetzt.

Es ist außerdem sichergestellt, dass sich der Kompressor 200 stabilisieren kann, was, wie bereits oben beschrieben, im Stand der Technik nicht unbedingt der Fall ist, wo die verfrühte Aktivierung des Integralteils $K_i$ des in

Gleichung 1 gezeigten Steueransatzes dazu führen kann, dass der Kompressor 200 in einem Betriebspunkt die durch $P_{Soll}$ definierte Saugleistung nicht oder erst spät erreicht.

Falls der Integralanteil $K_i$ in der Steuerung des EEV 100 stets aktiv ist, kann es zu einer Wechselwirkung mit der Kompressorsteuerung 210 kommen. Dies führt einerseits zu einer längeren Einschwingzeit der Kompressorregelung, andererseits aber auch zu einer schwankenden Regelung des EEV 100. Grund hierfür ist, dass sich die Kompressorsteuerung 210 und die Steuerungseinrichtung 110 teilweise gegenseitig stören. Die oben geschilderte Steuerung führt daher zu weniger Überschwingungen und einer schnelleren Einschwingzeit der Steuerung des EVV 100.

Durch die Steuerung des Öffnungsquerschnitts und nicht einer bestimmten Ventilposition wird erreicht, dass die Steuerung des EEV 100 diesen nichtlinearen Effekt nicht berücksichtigen muss. Dies führt zu einer verbesserten und vereinfachten Reglerparameteridentifikation und vermeidet Parameterumschaltungen in der Steuerungseinrichtung 110. Darüber hinaus ist die Umstellung auf einen neuen Antrieb wesentlich einfacher, da die Ventilkennlinie des EEV 100 unabhängig von der Steuerung ist.

In Ausführungsformen der Erfindung sind die Kompressorsteuerung 210 und die Steuereinrichtung 100 wie in Figur 1 gezeigt in einer übergeordneten Steuerung 50 integriert.

Es ist darauf hinzuweisen, dass die Nummerierung der Schritte S1 bis S7 nicht zwangsläufig eine zeitliche Reihenfolge impliziert. So werden beispielsweise in Ausführungsformen der Erfindung die Schritte S1 bis S4 weitestgehend parallel zu den Schritten S5 bis S7 durchgeführt.

Die Erfindung ist nicht auf die beschriebenen und dargestellten Ausführungsbeispiele beschränkt. Sie umfasst vielmehr auch alle fachmännischen Weiterbildungen im Rahmen der durch die Patentansprüche definierten Erfindung.

Neben den beschriebenen und abgebildeten Ausführungsformen sind weitere Ausführungsformen vorstellbar, welche weitere Abwandlungen sowie Kombinationen von Merkmalen umfassen können.

## Patentansprüche

1. Verfahren zur Steuerung eines elektronisch steuerbaren Expansionsventils (EEV) (100) in einem Kältemittelkreislauf (10), der Kältemittelkreislauf (10) zumindest umfassend ein zirkulierendes Kältemittel, einen Kompressor (200), einen in Flussrichtung des Kältemittels hinter dem Kompressor (200) und vor dem EEV (100) angeordneten Kondensator (300), und einen in Flussrichtung des Kältemittels hinter dem EEV (100) und vor dem Kompressor (200) angeordneten Verdunster (400), das Verfahren umfassend die folgenden Schritte:

   S1. Bestimmen einer gewünschten Verdunstungstemperatur $T_V$ des Kältemittels;

   S2. Bestimmen eines zu der Verdunstungstemperatur $T_V$ korrespondierenden Soll-Ansaugdruckes $P_{Ist}$ des Kältemittels an oder hinter einem Ausgang des Verdunsters (400);

   S3. Bestimmen eines Ist-Ansaugdruckes $P_{Ist}$ des Kältemittels an oder hinter dem Ausgang des Verdunsters (400) und Bestimmen einer Druckabweichung $\Delta_P$ zwischen Ist-Ansaugdruck $P_{Ist}$ und Soll-Ansaugdruck $P_{Soll}$;

   S4. Steuern des Kompressors (200) zumindest teilweise auf Grundlage der Druckabweichung $\Delta_P$;

   S5. Bestimmen einer Solltemperatur $T_{Soll}$ des Kältemittels an einer vorbestimmten Stelle des Kältekreislaufs (10);

   S6. Bestimmen einer Ist-Temperatur $T_{Ist}$ des Kältemittels an der vorbestimmten Stelle und Bestimmen einer Temperaturabweichung $\Delta_T$ zwischen Ist-Temperatur $T_{Ist}$ und Solltemperatur $T_{Soll}$;

   S7. Steuern des EEV (100) zumindest teilweise auf Grundlage der Temperaturabweichung $\Delta_T$.

2. Verfahren nach Anspruch 1, **dadurch gekennzeichnet, dass** das Steuern des EEV (100) in Schritt S7 sowohl auf Grundlage der Temperaturabweichung $\Delta_T$ als auch auf Grundlage der Druckabweichung $\Delta_P$ erfolgt.

3. Verfahren nach Anspruch 2, **dadurch gekennzeichnet, dass** das EEV (100) in Schritt S7 wahlweise mit einem PID-Steueransatz (Proportional-Integral-Differential), mit einem PD-Steueransatz (Proportional-Differential), oder mit einem quasi-PD-Steueransatz gesteuert wird.

4. Verfahren nach Anspruch 3, **dadurch gekennzeichnet, dass** Schritt S7 die folgenden Schritte umfasst:

   S7a - Vergleichen der Druckabweichung $\Delta_P$ mit einem vorbestimmten Toleranzwert $\varepsilon$ und Feststellen anhand des Vergleichs, ob der Ist-Ansaugdruck $P_{Ist}$ innerhalb oder außerhalb eines durch den Toleranzwert $\varepsilon$ festgelegten Toleranzbereichs $P_T$ um den Soll-Ansaugdruck $P_{Soll}$ liegt;

S7b - auf Grundlage der in Schritt S7a gemachten Feststellung, Steuern des EEV (100) in Schritt S7 mit einem PD-Steueransatz oder mit einem quasi-PD-Steuersatz in dem Fall, dass der Ist-Ansaugdruck $P_{Ist}$ außerhalb des vorbestimmen Toleranzbereichs um den Soll-Ansaugdruck $P_{Soll}$ liegt, und Steuern des EEV (100) in Schritt S7 mit einem PID-Steueransatz in dem Fall, dass der Ist-Ansaugdruck $P_{Ist}$ innerhalb des vorbestimmen Toleranzbereichs $P_T$ um den Soll-Ansaugdruck $P_{Soll}$ liegt.

5.  Verfahren nach Anspruch 4, **dadurch gekennzeichnet, dass** die Schritte S7a und S7b wiederholt in einer Schleife durchgeführt werden.

6.  Verfahren nach einem der Ansprüche 1 bis 5, **dadurch gekennzeichnet, dass** in Schritt S7 eine Eingangsgröße der Steuerung des EEV (100) die Temperaturabweichung DT ist und eine Ausgangsgröße der Steuerung ein Öffnungsquerschnitt des EEV (100).

7.  Verfahren nach einem der Ansprüche 1 bis 6, **dadurch gekennzeichnet, dass** die vorbestimmte Stelle des Kältekreislauf (10) an oder hinter dem Ausgang des Verdunsters (400) gelegen ist.

8.  Verfahren nach einem der Ansprüche 1 bis 7, **dadurch gekennzeichnet, dass** die Solltemperatur TS in Schritt S5 so bestimmt wird, dass sie um ein vorbestimmtes Maß höher ist als die Verdunstungstemperatur TV.

9.  Verfahren nach einem der Ansprüche 1 bis 6, **dadurch gekennzeichnet, dass** die vorbestimmte Stelle des Kältekreislauf (10) an oder hinter einem Ausgang des Kondensators (300) gelegen ist.

10. Verfahren nach Anspruch 9, **dadurch gekennzeichnet, dass** die Solltemperatur TS in Schritt S5 so bestimmt wird, dass sie um ein vorbestimmtes Maß geringer ist als die Verdunstungstemperatur TV.

11. Steuerungseinrichtung (110) für ein elektronisch steuerbares Expansionsventil (EEV) (100) in einem Kältemittelkreislauf (10), der Kältemittelkreislauf (10) zumindest umfassend:

    - ein zirkulierendes Kältemittel;
    - einen Kompressor (200) mit Kompressorsteuerung (210);
    - einen in Flussrichtung des Kältemittels hinter dem Kompressor (200) und vor dem EEV (100) angeordneten Kondensator (300);
    - einen in Flussrichtung des Kältemittels hinter dem EEV (100) und vor dem Kompressor (200) angeordneten Verdunster (400);
    - eine Einrichtung (105) zur Bestimmung und Übermittlung eines Temperatursignals an die Steuerungseinrichtung (110), wobei das Temperatursignal eine Ist-Temperatur TIst des Kältemittels an einer vorbestimmten Stelle des Kältekreislaufs (10) wiedergibt; und
    - eine Einrichtung (205) zur Bestimmung und Übermittlung eines Drucksignals an die Kompressorsteuerung (210) sowie and die Steuerungseinrichtung (110), wobei das Drucksignal einen Ist-Ansaugdruck PIst des Kältemittels an oder hinter dem Ausgang des Verdunsters (400) wiedergibt;

    wobei die Steuerungseinrichtung (110) zur Durchführung des Verfahrens nach einem der Ansprüche 1 bis 11 eingerichtet ist.

12. Steuerungseinrichtung (110) nach Anspruch 11, **dadurch gekennzeichnet, dass** die vorbestimmte Stelle des Kältekreislaufs (10) an oder hinter einem Ausgang des Verdunsters (400) gelegen ist.

13. Steuerungseinrichtung (110) nach Anspruch 10, **dadurch gekennzeichnet, dass** die vorbestimmte Stelle des Kältekreislaufs (10) an oder hinter einem Ausgang des Kondensators (300) gelegen ist.

14. Kältemittelkreislauf (10), umfassend:

    - ein elektronisch steuerbares Expansionsventil (EEV) (100);
    - eine Steuerungseinrichtung (110) für das EEV (100);
    - ein zirkulierendes Kältemittel;
    - einen Kompressor (200) mit einer Kompressorsteuerung (210);
    - einen in Flussrichtung des Kältemittels hinter dem Kompressor (200) und vor dem EEV (100) angeordneten Kondensator (300);

- einen in Flussrichtung des Kältemittels hinter dem EEV (100) und vor dem Kompressor (200) angeordneten Verdunster (400);
- eine Einrichtung (105) zur Bestimmung und Übermittlung eines Temperatursignals an die Steuerungseinrichtung (110), wobei das Temperatursignal eine Ist-Temperatur TIst des Kältemittels an einer vorbestimmten Stelle des Kältekreislaufs (10) wiedergibt; und
- eine Einrichtung (205) zur Bestimmung und Übermittlung eines Drucksignals an die Kompressorsteuerung (210) sowie and die Steuerungseinrichtung (110), wobei das Drucksignal einen Ist-Ansaugdruck PIst des Kältemittels an oder hinter dem Ausgang des Verdunsters (400) wiedergibt;

wobei die Steuerungseinrichtung (110) des EEV (100) zur Durchführung des Verfahrens nach einem der Ansprüche 1 bis 11 eingerichtet ist.

15. Kältemittelkreislauf (10) nach Anspruch 14, **dadurch gekennzeichnet, dass** die vorbestimmte Stelle des Kältekreislaufs (10) an oder hinter einem Ausgang des Verdunsters (400) gelegen ist.

16. Kältemittelkreislauf (10) nach Anspruch 14, **dadurch gekennzeichnet, dass** die vorbestimmte Stelle des Kältekreislaufs (10) an oder hinter einem Ausgang des Kondensators (300) gelegen ist.

17. Computerprogramm zur Durchführung des Verfahrens nach einem der Ansprüche 1 bis 11, wenn das Computerprogramm von einer Steuerungseinrichtung (110) eines elektronischen Expansionsventils (EEV) (100) ausgeführt wird oder auf einem computerlesbaren Datenträger gespeichert ist.

18. Computerlesbarer Datenträger, auf dem ein Computerprogramm nach Anspruch 17 gespeichert ist.

# Fig. 1

Europäisches Patentamt
European Patent Office
Office européen des brevets

# EUROPÄISCHER RECHERCHENBERICHT

**Nummer der Anmeldung**

EP 24 18 3581

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 6 082 128 A (LAKE BARRY J [US] ET AL) 4. Juli 2000 (2000-07-04) | 1-8, 11-15, 17,18 | INV. F25B49/02 |
| A | * Spalte 3, Zeile 65 - Spalte 15, Zeile 35; Abbildungen 1-9 * ----- | 9,10,16 | |
| Y | US 2014/345307 A1 (BAGLEY JEFFREY WILLIAM [US] ET AL) 27. November 2014 (2014-11-27) | 1-8, 11-15, 17,18 | |
| A | * Absätze [0016] - [0018]; Abbildungen 1,2 * ----- | 9,10,16 | |
| Y | US 2018/031288 A1 (HERN SHAWN A [US] ET AL) 1. Februar 2018 (2018-02-01) | 1-8, 11-15, 17,18 | |
| A | * Absätze [0056] - [0059]; Abbildungen 5-7 * ----- | 9,10,16 | |

**RECHERCHIERTE SACHGEBIETE (IPC)**

F25B

Der vorliegende Recherchenbericht wurde für alle Patentansprüche erstellt

| Recherchenort | Abschlußdatum der Recherche | Prüfer |
|---|---|---|
| München | 5. November 2024 | Weisser, Meinrad |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 18 3581

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-11-2024

| Im Recherchenbericht angeführtes Patentdokument | Datum der Veröffentlichung | Mitglied(er) der Patentfamilie | Datum der Veröffentlichung |
|---|---|---|---|
| US 6082128 A | 04-07-2000 | KEINE | |
| US 2014345307 A1 | 27-11-2014 | KEINE | |
| US 2018031288 A1 | 01-02-2018 | KEINE | |

Für nähere Einzelheiten zu diesem Anhang : siehe Amtsblatt des Europäischen Patentamts, Nr.12/82

EPO FORM P0461